# DEMANDE DE BREVET EUROPEEN

(11) **EP 4 124 792 A1**
(43) Date de publication de la demande: **01.02.2023**
(21) Numéro de dépôt: 22184514.2
(22) Date de dépôt: 12.07.2022
(51) Int. Cl.: F17C 13/00

(54) **CUVE, EN PARTICULIER POUR RÉSERVOIR A HYDROGÈNE LIQUIDE, POURVUE DE RAILS INTERNES POUR LA MISE EN PLACE D'UN MODULE EQUIPEMENTS**

(30) Priorité: 29.07.2021 FR 2108276
(71) Demandeur: Airbus Operations SAS, 31060 Toulouse (FR)
(72) Inventeur: GUILLOTEAU, Damien, 31060 TOULOUSE (FR)
(74) Mandataire: Gevers & Orès

(57) **Abrégé**

- Cuve, en particulier pour réservoir à hydrogène liquide, pourvue de rails internes pour la mise en place d'un module d'équipements.
- La cuve (1) comprend un tronçon central (2) pourvu d'une paroi (3), ainsi qu'au moins un rail (4) et de préférence une pluralité de rails (4), chacun des rails (4) étant intégré dans la paroi (3) du tronçon central (2) de la cuve (1) de manière à être accessible de l'intérieur de la cuve (1), de tels rails (4) permettant une intégration et une fixation facilitées d'un module comprenant des équipements à l'intérieur de la cuve (1), de manière à simplifier la fabrication et l'assemblage de la cuve (1).

## Description

### DOMAINE TECHNIQUE

La présente invention concerne une cuve, en particulier pour réservoir à hydrogène liquide, ainsi qu'un réservoir à hydrogène liquide pourvu d'une telle cuve.

### ETAT DE LA TECHNIQUE

L'hydrogène liquide étant un combustible écologique n'émettant pas de gaz à effet de serre, il est envisagé de développer son utilisation et de l'utiliser à l'avenir dans des domaines très variés et notamment sur des aéronefs, en particulier sur des avions de transport.

Dans une telle utilisation notamment, l'hydrogène liquide doit être stocké dans un réservoir approprié.

De façon usuelle, un réservoir à hydrogène liquide comporte un assemblage complexe de structures et de systèmes, tels que des tuyaux, des capteurs, des parois anti-ballotement, qui sont montés dans une cuve (interne) du réservoir.

Tous ces éléments doivent être attachés à la structure interne de la cuve par l'intermédiaire de pattes de fixation. Un tel assemblage nécessite ainsi un nombre très élevé de pattes de fixation qui sont, généralement, toutes soudées à la paroi interne de la cuve.

En raison, de fortes contraintes d'accessibilité, ces opérations de fixation et de soudage sont très difficiles à réaliser, et l'assemblage de ces éléments est long et difficile à mettre en œuvre.

### EXPOSÉ DE L'INVENTION

La présente invention concerne une cuve, en particulier pour réservoir à hydrogène liquide, ladite cuve comprenant un tronçon central pourvu d'une paroi, qui a pour objet de remédier à ces inconvénients.

Selon l'invention, ladite cuve comporte au moins un rail, ledit rail étant intégré dans la paroi du tronçon central de la cuve de manière à être accessible de l'intérieur de la cuve. De préférence, ledit rail est soudé à ladite paroi.

Ainsi, grâce à l'invention, on intègre un ou plusieurs rails dans la paroi de la cuve. De tels rails permettent une insertion et une fixation facilitées à l'intérieur de la cuve d'un module comprenant l'ensemble des équipements, comme précisé ci-dessous, ce qui permet notamment de remédier aux contraintes d'accessibilité et de simplifier la fabrication et l'assemblage de la cuve.

Avantageusement, le rail est pourvu sur une face interne d'une glissière destinée à recevoir au moins un élément de liaison, ladite glissière permettant un déplacement par translation du ou des éléments de liaison.

En outre de façon avantageuse, la cuve comporte une pluralité de rails longitudinaux intégrés dans la paroi du tronçon central en étant orientés de manière à présenter des directions parallèles entre elles.

Par ailleurs, avantageusement, la cuve comporte au moins un cadre pourvu d'ouvertures de passage, apte à être agencé transversalement dans la cuve, en étant monté sur les rails.

Dans un mode de réalisation particulier, la cuve comporte une pluralité d'éléments de liaison, chacun desdits éléments de liaison étant fixé au cadre par l'une de ses extrémités et étant pourvu à l'autre extrémité d'une tête apte à pouvoir glisser en coopérant avec le rail et à pouvoir être fixée avec le rail.

Dans un mode de réalisation préféré, la cuve comporte un module formé d'une pluralité de cadres liés ensemble par l'intermédiaire d'équipements, ledit module étant apte à être agencé dans la cuve, en étant monté sur les rails.

La présente invention concerne également un réservoir à hydrogène liquide, qui comporte une cuve telle que celle décrite ci-dessus.

La présente invention concerne, en outre, un procédé de fabrication et d'assemblage d'une cuve telle que celle décrite ci-dessus ou d'un réservoir à hydrogène liquide tel que précité.

Selon l'invention, ledit procédé comporte au moins les étapes suivantes :
- une étape de fabrication consistant à fabriquer une cuve pourvue d'un tronçon central, ledit tronçon central présentant une paroi dans laquelle sont intégrés des rails ;
- une étape de montage consistant à monter des équipements dans une pluralité de cadres disposés côte à côte et pourvus d'éléments de liaison, de manière à former un module ;
- une étape d'insertion consistant à insérer le module dans la cuve par coulissement de têtes des éléments de liaison dans les rails ; et
- une étape de fixation consistant, dans une position montée du module dans la cuve, à maintenir le module en position.

De préférence, l'étape de fixation consiste, pour maintenir le module en position, à fixer les têtes des éléments de liaison aux rails.

### BRÈVE DESCRIPTION DES FIGURES

Les figures annexées feront bien comprendre comment l'invention peut être réalisée. Sur ces figures, des références identiques désignent des éléments semblables.
La figure 1 est une vue schématique, en perspective, d'un mode de réalisation particulier du tronçon central d'une cuve pourvue de rails.
La figure 2 est une vue transversale schématique de la cuve de la figure 1.
La figure 3 est une vue schématique, en perspective, d'un mode de réalisation particulier d'un réservoir à hydrogène liquide, partiellement ouvert pour en visualiser l'intérieur.
La figure 4 est une vue schématique, en coupe, d'une partie d'un tronçon central d'une cuve, pourvue d'un rail.
La figure 5 est une vue transversale schématique d'une cuve pourvu d'un cadre.
La figure 6 est une vue, en perspective, d'un élément de liaison.
La figure 7 est une vue schématique, en coupe, d'un élément de liaison liant un cadre montré partiellement à un rail.
La figure 8 montre schématiquement les étapes principales d'un procédé de fabrication et d'assemblage d'une cuve.
La figure 9 est une vue, en perspective, d'un module pourvu de cadres et d'équipements.
La figure 10 est une vue, en perspective, d'une cuve dans laquelle est monté un module pourvu de cadres et d'équipements.

### DESCRIPTION DÉTAILLÉE

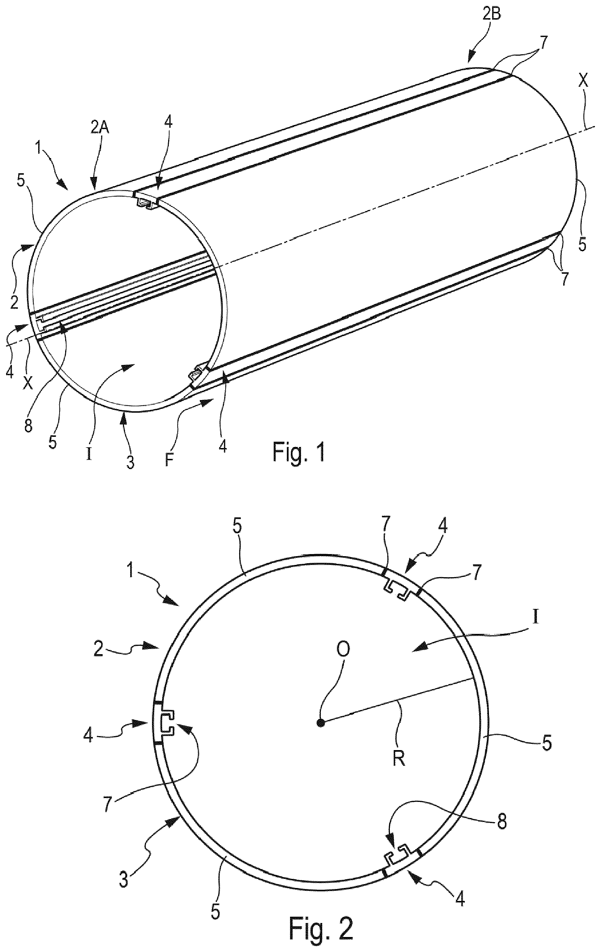

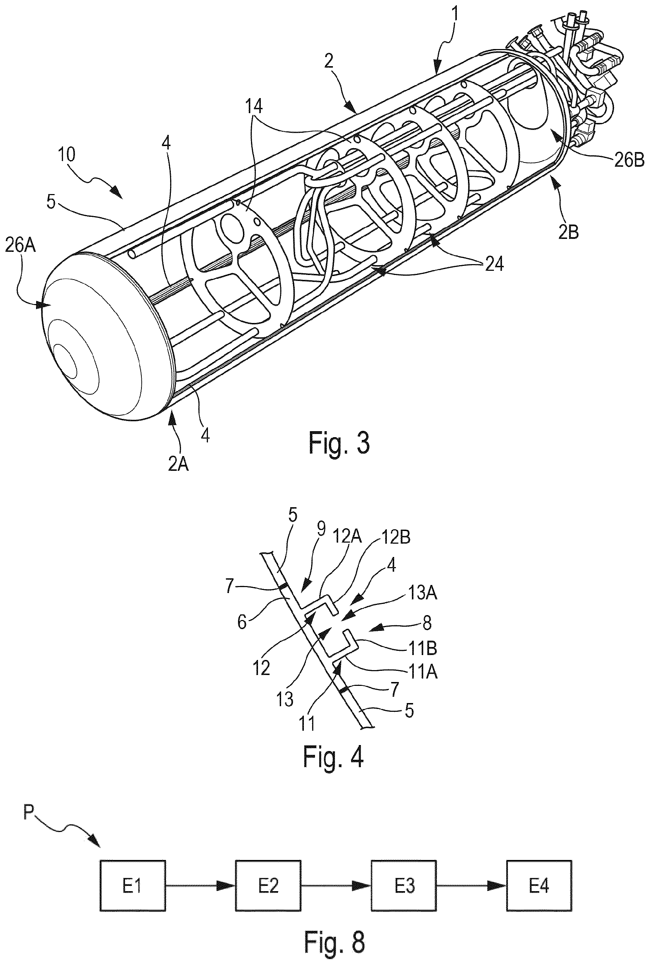

La cuve 1 permettant d'illustrer l'invention et représentée schématiquement et partiellement dans un mode de réalisation particulier sur les figures 1 et 2, est particulièrement appropriée à être montée dans un réservoir 10 à hydrogène liquide, tel que celui représenté sur la figure 3.

De façon usuelle, un tel réservoir 10 à hydrogène liquide comporte généralement, en plus de la cuve 1 qui est une cuve interne, une seconde cuve dite cuve externe (non représentée). La cuve interne est montée dans la cuve externe, et elle comprend des équipements fonctionnels précisés ci-dessous.

Bien que non exclusivement, un réservoir 10 à hydrogène liquide est particulièrement bien adapté pour équiper un engin mobile fonctionnant, au moins partiellement, à l'hydrogène. De manière préférée, le réservoir 10 est destiné à équiper un aéronef, en particulier un avion de transport.

Dans le mode de réalisation préféré, représenté sur les figures 1 et 2, la cuve 1 comprend un tronçon central 2 de forme cylindrique, représentant une virole, d'axe longitudinal X-X. Ce tronçon central 2 présente une paroi 3. La cuve 1 peut également comporter deux dômes 26A, 26B (figure 3) dont chacun est monté de façon usuelle à l'une des extrémités 2A, 2B du tronçon central 2.

Dans le cadre de la présente invention, la cuve peut comprendre un tronçon central présentant des formes autres qu'une forme cylindrique, par exemple une forme conique ou une forme avec une section transversale oblongue ou quelconque. La forme de la cuve peut, notamment, être adaptée à l'espace disponible pour l'agencement du réservoir à hydrogène liquide, en particulier lorsque ce dernier est destiné à équiper un engin mobile, par exemple un aéronef.

La cuve 1 comprend également des rails 4 qui sont intégrés dans la paroi 3 du tronçon central 2 et y sont soudés, comme précisé ci-dessous. Les rails 4 sont accessibles de l'intérieur de la cuve 1.

Dans la description suivante :
- les termes « interne » et « intérieur » s'appliquent à l'espace entouré et délimité par la paroi 3 de la cuve 1, comme illustré par une flèche I sur la figure 1 ; et
- les termes « externe » et « extérieur » s'appliquent à ce qui est hors de l'espace entouré par la paroi 3 de la cuve 1, comme illustré par une flèche F sur la figure 1.

Le tronçon central 2 comprend, également, une pluralité de panneaux 5 allongés (selon l'axe longitudinal X-X), de forme courbe (concave) en section transversale. La courbure de chacun des panneaux 5 correspond à celle d'un arc de cercle de rayon égal au rayon R du tronçon central 2. Sur la figure 2, on a représenté le rayon R défini entre un point central O (situé sur l'axe longitudinal X-X) et la paroi 3.

Dans un mode de réalisation particulier, les panneaux 5 sont identiques, et entre chaque paire de panneaux 5 adjacents est intégré un rail 4.

En outre, dans un mode de réalisation particulier, les rails 4 sont répartis transversalement uniformément, à savoir à équidistance d'un rail au rail voisin.

Dans le mode de réalisation représenté sur les figures 1 et 2, le tronçon central 2 comporte trois panneaux 5 identiques et trois rails 4 également identiques.

Chacun des rails 4 comprend, comme représenté sur la figure 4, une base 6 allongée. La base 6 présente, de préférence, une forme courbe (concave) en section transversale, avec sensiblement une même courbure que celle des panneaux 5 du corps central 2.

Chacun des rails 4 est donc soudé à deux panneaux 5 adjacents. Les rails 4 et les panneaux 5 sont soudés ensemble par l'intermédiaire de cordons de soudure 7 longitudinaux bout-à-bout.

De préférence, ce soudage est réalisé par l'intermédiaire d'un soudage par friction malaxage de type FSW (pour « Friction Stir Welding » en anglais). Dans le cadre de la présente invention, d'autres méthodes de soudage usuelles peuvent également être employées.

Chacun des rails 4 comprend une glissière 8 sur une face interne 9 de la base 6, comme représenté sur la figure 4. Cette glissière 8, accessible donc de l'intérieur de la cuve 1, est destinée à permettre un déplacement par translation d'éléments de liaison 16, comme précisé ci-dessous. Pour ce faire, la glissière 8 comprend un logement 13 destiné à recevoir une tête 18 d'un élément de liaison 16 et, comme précisé ci-après, les logements 13 des glissières 8 des rails 4 et les têtes 18 des éléments de liaison 16 présentent des formes coopérantes.

Dans le mode de réalisation de la figure 4, la glissière 8 comprend deux équerres 11 et 12 allongées. Chacune de ces équerres 11 et 12 comprend une branche 11A, 12A plane et allongée, solidarisée à la base 6, et une branche 11B, 12B (également plane et allongée) liée perpendiculairement à la branche respectivement 11A, 12A. Les équerres 11 et 12 sont agencées avec leurs branches 11B et 12B se faisant face de manière à former un logement 13 pourvu d'une ouverture 13A.

Dans une variante de réalisation (non représentée), les équerres peuvent être agencées en sens opposés, avec leurs branches 11B et 12B s'éloignant l'une de l'autre. Dans cette variante, on prévoit également un élément de liaison de forme complémentaire.

Les équerres 11 et 12 peuvent être des pièces rapportées qui sont fixées sur la base 6. Toutefois, dans un mode de réalisation préféré, les équerres 11 et 12 et la base 6 forment une seule et même pièce.

Dans un mode de réalisation particulier, chacun de ces rails 4 est un profilé, de préférence extrudé. On est ainsi en mesure de fabriquer et d'utiliser des pièces standard pour les rails 4, ce qui permet notamment de réduire leur coût de fabrication et donc celui de la cuve 1.

Dans un mode de réalisation particulier (non représenté), les extrémités longitudinales des rails 4 sont chanfreinées pour faciliter le soudage des dômes qui sont fixés aux extrémités de la cuve 1 pour la fermer.

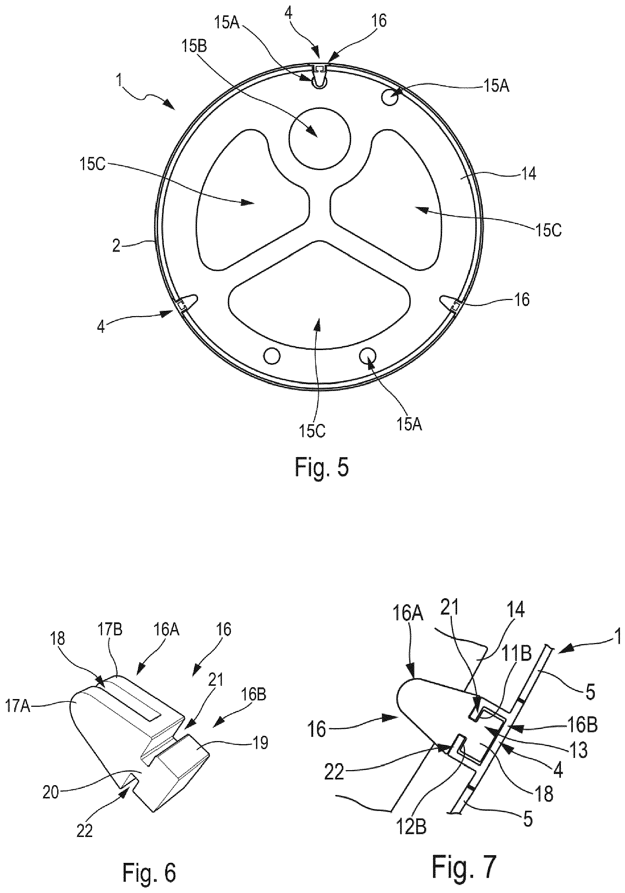

Par ailleurs, la cuve 1 comporte une pluralité de cadres 14, tel que celui montré sur la figure 5.

Chacun de ces cadres 14 correspond à un disque, de diamètre légèrement inférieur à celui de la cuve 1, comme précisé ci-dessous. Ce disque est pourvu d'ouvertures de passage 15A, 15B et 15C, de formes et de tailles variées. Dans l'exemple représenté sur la figure 5, les ouvertures de passage 15A et 15B, de forme circulaire, peuvent être destinées (si nécessaire) au passage d'équipements. Quant aux ouvertures de passage 15C de tailles plus importantes, elles permettent le passage du fluide (hydrogène liquide) de manière à conférer une fonction anti-ballottement au cadre 14.

Chacun des cadres 14 est apte à être monté transversalement dans la cuve 1, de préférence de sorte que le disque formant le cadre 14 soit agencé orthogonalement à l'axe longitudinal X-X.

Chacun des cadres 14 est monté dans la cuve 1 en étant lié aux rails 4. Pour ce faire, on prévoit une pluralité d'éléments de liaison 16, tels que celui représenté sur les figures 6 et 7, qui sont destinés à permettre la liaison des cadres 14 aux rails 4.

Chacun des éléments de liaison 16 est fixé à un cadre 14 par l'une 16A de ses extrémités 16A, 16B. Dans un mode de réalisation particulier, l'extrémité 16A est pourvue de deux branches 17A et 17B planes et identiques, qui sont agencées côte à côte en parallèle de manière à créer un espace libre 18 dans lequel est insérée un bord du cadre 14. Dans ce cas, comme représenté sur la figure 7, l'extrémité 16A de l'élément de liaison 16 est fixée au cadre 14, de préférence par soudage.

De plus, chacun des éléments de liaison 16 est pourvu, à l'autre extrémité 16B, d'une tête 18 apte à pouvoir glisser dans le rail 4 en y étant maintenue.

Les têtes 18 des éléments de liaison 16 et les logements 13 (figure 4) des glissières 8 des rails 4, destinés à recevoir ces têtes 18, présentent des formes coopérantes. On entend par formes coopérantes des formes identiques, mais avec une taille du contour de la tête 18 légèrement inférieure à celle du logement 13 de manière à permettre un déplacement par translation de la tête 18 dans le logement 13, tout en y étant maintenue.

Dans l'exemple représenté sur les figures 6 et 7, la tête 18 et le logement 13 présentent une forme rectangulaire en section transversale. Des formes coopérantes autres qu'une forme rectangulaire peuvent bien entendu être prévues pour les têtes 18 et les logements 13.

Les extrémités 16A et 16B de l'élément de liaison 16 sont liées ensemble par l'intermédiaire d'une languette 20 (figure 6) permettant de former deux gorges latérales 21 et 22. Comme représenté sur la figure 7, les branches 11A et 11B des équerres 11 et 12 pénètrent, respectivement, dans les gorges latérales 21 et 22, ce qui permet d'assurer une bonne stabilité.

Dans un mode de réalisation préféré, la cuve 1 comporte un module 24 formé d'une pluralité de cadres 14 liés ensemble par l'intermédiaire d'équipements 25, notamment des tuyaux, des capteurs, un doigt réfrigérant,..., comme précisé ci-dessous. Ce module 24 est apte à être inséré dans la cuve 1, comme représenté sur la figure 3 et précisé ci-dessous, par l'intermédiaire des éléments de liaison16 et des rails 4.

Les cadres 14, tels que décrits ci-dessus, présentent de nombreux avantages. En effet, chacun des cadres 14 utilisés, fabriqués par exemple en aluminium, réalise l'ensemble des fonctions suivantes :
- il sert de support à tous les équipements 25 précisés ci-dessous, à l'intérieur de la cuve 1, ce qui permet de supprimer toutes les fixations usuelles ;
- il peut agir comme cadre anti-ballottement, ce qui permet de supprimer les parois anti-ballottement usuelles ; et
- il participe à l'obtention de la stabilité structurelle du module 24.

On précise, ci-après, un procédé de fabrication et d'assemblage de la cuve 1, telle que décrite ci-dessus, du réservoir 10 à hydrogène liquide.

Ce procédé P de fabrication et d'assemblage comporte, comme représenté sur la figure 8, les principales étapes successives suivantes :
- une étape de fabrication E1 ;
- une étape de montage E2 ;
- une étape d'insertion E3 ; et
- une étape de fixation E4.

L'étape de fabrication E1 consiste à fabriquer une cuve 1 comprenant un tronçon central 2 pourvu de rails 4 intégrés (figure 1). Pour ce faire, on utilise des panneaux 5 et des rails 4, de préférence de forme standard, que l'on agence de façon alternative, et on soude chaque rail 4 de part et d'autre à un panneau 5 de manière à obtenir le tronçon central 2 avec rails 4 intégrés.

A cette étape de fabrication E1, diverses méthodes de soudage usuelles peuvent être employées pour souder les rails 4 aux panneaux 5. Toutefois, de préférence, ce soudage est réalisé par l'intermédiaire d'un soudage par friction malaxage de type FSW (pour « Friction Stir Welding » en anglais).

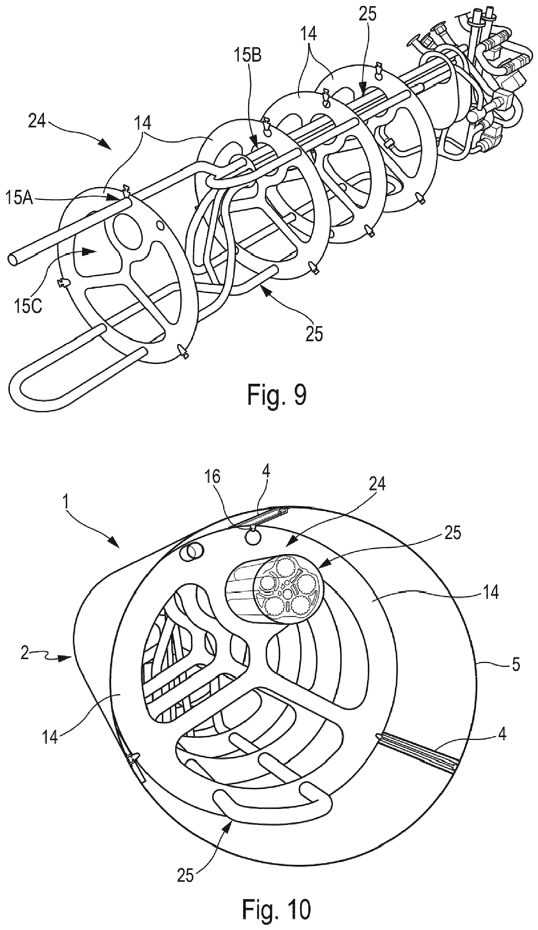

L'étape de montage E2 consiste, quant à elle, à monter des équipements 25 dans une pluralité de cadres 14 disposés côte à côte et pourvus d'éléments de liaison 16, de manière à former un module 24, comme représenté sur la figure 9.

Les équipements qui sont identifiés par une référence 25 générale concernent l'ensemble des équipements qui doivent être agencés à l'intérieur de la cuve 1 et qui sont nécessaires à son fonctionnement, en tant que cuve interne d'un réservoir 10 à hydrogène liquide. Il s'agit principalement de tuyaux (ou conduites). Pour ce faire, on fait traverser une partie des équipements 25, en particulier des tuyaux, à travers certaines des ouvertures de passage 15A et 15B des cadres 14, et plus précisément notamment des tuyaux individuels à travers les ouvertures de passage 15A de diamètre réduit et des faisceaux de tuyaux à travers les ouvertures de passage 15B de diamètre plus important.

A titre d'illustration, non limitative, les équipements 25 comprennent des tuyaux, des capteurs, un doigt réfrigérant, ..., et notamment tous les éléments usuels nécessaires pour générer les basses températures requises pour le stockage de l'hydrogène liquide.

Cette étape de montage E2 est réalisée à l'extérieur de la cuve 1, ce qui permet de remédier aux contraintes d'accessibilité existant dans la cuve 1.

A la fin de l'étape de montage E2, on obtient grâce auxdits cadres 14 et aux équipements 25 qui traversent les cadres 14, un module 24 présentant une stabilité structurelle permettant son déplacement.

Chacun des cadres 14 du module 24 est également pourvu d'éléments de liaison 16 de même nombre que le nombre de rails de la cuve 1. Ces éléments de liaison 16 sont fixés par leur extrémité 16A au cadre 14 et ils sont positionnés en périphérie du cadre 14 de manière à pouvoir être introduits dans les glissières 8 des rails 4 lorsque le module 24 est monté dans la cuve 1.

L'étape d'insertion E3 qui suit consiste à insérer le module 24 (en tant qu'ensemble unitaire) dans le tronçon central 2 de la cuve 1, à partir de l'une des extrémités 2A, 2B (figure 1) du tronçon central 2. Cette insertion est réalisée par une translation du module 24 via un coulissement des têtes 18 des éléments de liaison 16 dans les glissières 8 des rails 4.

L'étape de fixation E4 est mise en œuvre, quant à elle, après l'étape d'insertion E3 lorsque le module 24 est complètement inséré (ou installé) et se trouve dans sa position définitive dans la cuve 1, comme représenté sur la figure 10. L'étape de fixation E4 consiste à maintenir le module 24 en position par tout type de moyen connu et par exemple en fixant les têtes 18 des éléments de liaison 16 aux rails 4.

Pour ce faire, dans un premier mode de réalisation, les têtes 18 des éléments de liaison 16 sont soudées aux rails 4. Diverses méthodes de soudage usuelles peuvent être employées pour réaliser ce soudage, et notamment un soudage par friction malaxage de type FSW (pour « Friction Stir Welding » en anglais) ou un soudage par friction linéaire de type LFW (pour « Linear Friction Welding » en anglais).

Dans un second mode de réalisation, on prévoit un système de blocage ou de verrouillage permettant de bloquer les têtes 18 des éléments de liaison 16 dans les rails 4. A titre d'exemple, le système de blocage peut comporter, pour chaque élément de liaison, un pion qui est prévu sur la tête de l'élément de liaison, qui est contraint élastiquement, et qui est configuré pour pénétrer dans un orifice pratiqué dans le rail, lorsque le cadre (sur lequel est fixé l'élément de liaison) arrive dans sa position définitive, au cours de l'insertion du module dans le tronçon central.

Sur la représentation de la figure 3, l'un des panneaux 5 de la cuve 1 est enlevé, pour permettre de voir l'intérieur de la cuve 1 et notamment le module 24 pourvu des cadres 14 et des équipements 25, qui y est installé.

Le procédé d'assemblage pour obtenir une cuve 1 pour un réservoir 10 à hydrogène liquide, par exemple tel que représenté sur la figure 3, comporte d'autres étapes, par exemple une étape de fixation de dômes sur le tronçon central, qui n'entrent pas dans le cadre de la présente invention et ne sont pas décrites davantage.

La présente invention présente de nombreux avantages, et en particulier les avantages suivants :
- une simplification de la fabrication et de l'assemblage de la cuve 1, qui représente de préférence une cuve interne d'un réservoir 10 à hydrogène liquide, notamment pour les raisons suivantes :
   - l'assemblage des équipements dans un unique module 24 et l'insertion dans la cuve de cet unique module 24 ;
   - l'utilisation d'un nombre restreint de pièces et la possibilité de standardiser les principales pièces utilisées, à savoir principalement les panneaux 5, les rails 4, les cadres 14 et les éléments de liaison 16 ;
   - un nombre réduit de points d'interface et la suppression de toutes les pattes de fixation usuelles ;
   - la suppression de parois anti-ballottement ; et
- les caractéristiques de l'invention peuvent être adaptées à des cuves de tailles et de configurations variées.

## Revendications

1. Cuve, en particulier pour réservoir à hydrogène liquide, ladite cuve (1) comprenant un tronçon central (2) pourvu d'une paroi (3),
**caractérisée en ce qu'**elle comporte au moins un rail (4), ledit rail (4) étant intégré dans la paroi (3) du tronçon central (2) de la cuve (1) de manière à être accessible de l'intérieur de la cuve (1), ledit rail (4) étant pourvu sur une face interne (9) d'une glissière (8) destinée à recevoir au moins un élément de liaison (16), ladite glissière (8) permettant un déplacement par translation du ou des éléments de liaison (16).

2. Cuve selon la revendication 1,
**caractérisée en ce que** le rail (4) est soudé à la paroi (3) du tronçon central (2) de la cuve (1).

3. Cuve selon l'une quelconque des revendications 1 et 2,
**caractérisée en ce qu'**elle comporte une pluralité de rails (4) longitudinaux intégrés dans la paroi (3) du tronçon central (2) en étant orientés de manière à présenter des directions parallèles entre elles.

4. Cuve selon l'une quelconque des revendications 1 à 3,
**caractérisée en ce qu'**elle comporte au moins un cadre (14) pourvu d'ouvertures de passage (15A, 15B, 15C), apte à être agencé transversalement dans la cuve (1), en étant monté sur les rails (4).

5. Cuve selon la revendication 4,
**caractérisée en ce qu'**elle comporte une pluralité d'éléments de liaison (16), chacun desdits éléments de liaison (16) étant fixé au cadre (14) par l'une (16A) de ses extrémités et étant pourvu à l'autre extrémité (16B) d'une tête (18) apte à pouvoir glisser en coopérant avec le rail (4) et à pouvoir être fixée avec le rail (4).

6. Cuve selon l'une quelconque des revendications 4 ou 5,
**caractérisée en ce qu'**elle comporte un module (24) formé d'une pluralité de cadres (14) liés ensemble par l'intermédiaire d'équipements (25), ledit module (24) étant apte à être agencé dans la cuve (1), en étant monté sur les rails (4).

7. Réservoir pour hydrogène liquide,
**caractérisé en ce qu'**il comporte une cuve (1) selon l'une quelconque des revendications 1 à 6.

8. Procédé de fabrication et d'assemblage d'une cuve selon la revendication 6 ou d'un réservoir selon la revendication 7,
**caractérisé en ce qu'**il comporte au moins les étapes suivantes :
- une étape de fabrication (E1) consistant à fabriquer une cuve (1) pourvue d'un tronçon central (2), ledit tronçon central (2) présentant une paroi (3) dans laquelle sont intégrés des rails (4) ;
- une étape de montage (E2) consistant à monter des équipements (25) dans une pluralité de cadres (14) disposés côte à côte et pourvus d'éléments de liaison (16), de manière à former un module (24) ;
- une étape d'insertion (E3) consistant à insérer le module (24) dans la cuve (1) par coulissement de têtes (18) des éléments de liaison (16) dans les rails (4) ; et
- une étape de fixation (E4) consistant, dans une position montée du module (24) dans la cuve (1), à maintenir le module (24) en position.

9. Procédé selon la revendication 8,
**caractérisé en ce que** l'étape de fixation (E4) consiste, pour maintenir le module (24) en position, à fixer les têtes (18) des éléments de liaison (16) aux rails (4).
